# DEMANDE DE BREVET EUROPEEN

(11) **EP 3 474 352 A1**
(43) Date de publication de la demande: **24.04.2019**
(21) Numéro de dépôt: 18201131.2
(22) Date de dépôt: 18.10.2018
(51) Int. Cl.: H01M 4/20, H01M 10/08, H01M 10/10

(54) **PROCÉDÉ DE FABRICATION D'UN ACCUMULATEUR AU PLOMB-ACIDE**

(30) Priorité: 20.10.2017 FR 1759907
(71) Demandeur: Commissariat à l'Energie Atomique et aux Energies Alternatives, 75015 Paris (FR)
(72) Inventeur: LANNELONGUE, Jérémy, 73000 CHAMBERY (FR); KIRCHEV, Angel Zhivkov, 73100 AIX LES BAINS (FR); CUGNET, Mikael, 73000 CHAMBERY (FR)
(74) Mandataire: Cabinet Camus Lebkiri

(57) **Abrégé**

L'invention concerne un procédé de fabrication d'un accumulateur (10) au plomb-acide muni d'un boîtier (11), comprenant les étapes suivantes :
- disposer au moins une électrode négative (12) et au moins une électrode positive (13) dans le boîtier, ladite au moins une électrode positive comprenant un collecteur de courant recouvert d'une pâte de matériau actif ;
- remplir le boîtier (11) d'un électrolyte (18) comprenant en pourcentage massique entre 7 % et 24 % d'acide sulfurique ;
- soumettre ladite au moins une électrode positive à un processus de formation dans le boîtier (11), de façon à convertir la pâte de matériau actif en un matériau actif positif ;
et dans lequel une source d'ions phosphates, telle que l'acide phosphorique, est incorporée dans l'électrolyte (18) ou la pâte de matériau actif avant d'accomplir le processus de formation de ladite au moins une électrode positive (13).

## Description

### DOMAINE TECHNIQUE

La présente invention concerne un accumulateur au plomb-acide utilisé comme dispositif de stockage d'énergie électrochimique, notamment dans le domaine de l'automobile, un électrolyte pour accumulateur au plomb-acide et un procédé de fabrication d'un accumulateur au plomb-acide.

### ÉTAT DE LA TECHNIQUE

Les batteries au plomb-acide sont formées de plusieurs éléments accumulateurs connectés en série et/ou en parallèle. Ces éléments accumulateurs, appelés également « cellules », sont logés dans un boîtier fermé par un couvercle. Chaque accumulateur comporte généralement plusieurs électrodes (appelées « plaques ») positives et négatives en contact avec un électrolyte à base d'acide sulfurique (H₂SO₄) dilué. Les électrodes comprennent chacune un collecteur de courant, par exemple en forme de grille, imprégné d'un matériau actif à base de plomb, typiquement du dioxyde de plomb (PbO₂) pour les électrodes positives et du plomb spongieux (Pb) pour les électrodes négatives. Le collecteur de courant sert de support mécanique au matériau actif et assure la connexion électrique entre le matériau actif de l'électrode et une borne de l'accumulateur. Les réactions chimiques ayant lieu dans l'accumulateur en décharge convertissent le dioxyde de plomb de l'électrode positive et le plomb de l'électrode négative en sulfate de plomb (PbSO₄), et inversement en charge.

La fabrication d'une batterie au plomb-acide comporte notamment :
- une étape d'enduction des collecteurs de courant positifs avec une pâte de matériau actif positif et des collecteurs de courant négatifs avec une pâte de matériau actif négatif ;
- une étape de durcissement (« curing ») des pâtes de matériau actif, afin notamment d'améliorer leur adhésion sur les collecteurs de courant ;
- un processus dit de « formation » (« forming ») des électrodes, au cours duquel les pâtes durcies sont converties en matériaux actifs (positif et négatif) par réaction électrochimique avec de l'acide sulfurique.

Le processus de formation des électrodes comprend généralement une première phase d'imbibition ou trempage (« soaking ») des électrodes dans une solution d'acide sulfurique, sans apport d'électrons, et une deuxième phase de conversion électrochimique, en faisant en outre circuler un courant électrique à travers les électrodes. Lors de la première phase, les composants des pâtes durcies (principalement des sulfates de plomb basiques et de l'oxyde de plomb) sont transformés en sulfate de plomb(II) (PbSO₄). Lors de la deuxième phase, le sulfate de plomb(II) est converti en dioxyde de plomb aux électrodes positives et en plomb spongieux aux électrodes négatives, à la manière d'une charge normale.

Il existe deux types de formation des électrodes, la formation en réservoir (« tank formation ») et la formation en boîtier (« container formation »), tous les deux décrits en détail dans le document [« Encyclopedia of Electrochemical Power Sources / Secondary Batteries - Lead-Acid Systems: Curing and Formation », R. Wagner, pp.662-676, Elsevier B.V., 2009].

La formation en réservoir signifie que des électrodes non formées, i.e. revêtues de pâte durcie, sont disposées dans un réservoir rempli d'un premier électrolyte et que la formation des électrodes a lieu dans ce réservoir. Le premier électrolyte comprend une solution d'acide sulfurique de densité (« specific gravity » en anglais) faible, typiquement de l'ordre de 1,06 g/cm³. Après formation, les électrodes sont retirées du réservoir, rincées avec de l'eau puis séchées. Les électrodes ainsi formées sont qualifiés de « chargées à sec ». Elles sont ensuite assemblées en cellules et connectées en batterie dans un boîtier. La batterie peut être stockée dans cet état pendant une longue durée, jusqu'à ce qu'elle soit activée en remplissant son boîtier d'un deuxième électrolyte. Ce deuxième électrolyte, prévu pour le cyclage de la batterie, est constitué d'une solution d'acide sulfurique de densité plus élevée, typiquement comprise entre 1,24 g/cm³ et 1,30 g/cm³.

La formation en boîtier consiste à former les électrodes directement dans le boîtier de la batterie, après avoir assemblé la batterie avec des électrodes non formées et rempli le boîtier d'électrolyte (acide sulfurique dilué). Ce processus de formation peut être effectué en une seule étape, lorsque l'électrolyte utilisé pour la formation sert également au cyclage de la batterie, ou en deux étapes, lorsque l'électrolyte utilisé pour la formation est remplacé par un électrolyte de cyclage, de plus forte concentration en acide sulfurique (densité : 1,24-1,30 g/cm³).

L'acide phosphorique (H₃PO₄) est un additif couramment employé pour améliorer la durée de vie des électrodes positives, en particulier dans les batteries à régulation par soupape (ou VRLA, pour « Valve-Regulated Lead-Acid » en anglais) dont l'électrolyte est gélifié.

À titre d'exemple, le brevet US3765942 décrit un accumulateur au plomb construit à partir d'électrodes chargées à sec. L'électrolyte de l'accumulateur comprend de l'acide sulfurique dilué, de densité comprise entre 1,24 g/cm³ et 1,30 g/cm³, auquel est ajouté entre 20 g et 35 g d'acide phosphorique par litre d'électrolyte. L'électrolyte est gélifié en y ajoutant de l'acide silicique sous forme de particules. La quantité d'acide silicique représente entre 3 % et 10 % de la masse de l'électrolyte.

En contrepartie d'une durée de vie augmentée, l'ajout de l'acide phosphorique dans l'électrolyte entraîne une diminution de la capacité des électrodes positives à faible courant de décharge (Cₙ/20h ou Cₙ/5h, avec Cₙ la capacité nominale en Ah). D'après les articles [« Effects of phosphoric acid additions on the behaviour of the lead-acid cell: A review », E. Voss, Journal of Power Sources, Vol. 24, pp.171-184, 1988] et [« Phosphoric acid as an electrolyte additive for lead/acid batteries in electric-vehicle applications », E. Meissner, Journal of Power Sources, Vol. 67, pp.135-150, 1997], cette diminution est de l'ordre de 15 %.

Des résultats similaires sont obtenus lorsque l'acide phosphorique est incorporé à la pâte de matériau actif positif, plutôt qu'à l'électrolyte. D'après l'article de Voss susmentionné, la quantité d'acide phosphorique dans la pâte de matériau actif positif ne devrait pas dépasser 40 g par kg d'oxyde de plomb (PbO), le principal constituant de la pâte.

Par ailleurs, le document [« New Gel Filling and Formation Process for OPzV and PzV Cells », K.D. Merz et al., Proceedings of the 15th European Lead Battery Conference, 13-16 September 2016, Malta] enseigne qu'il n'est pas possible de former des électrodes en présence d'acide phosphorique. Par conséquent, l'utilisation d'acide phosphorique est incompatible avec le processus de formation des électrodes en boîtier et en une seule étape (« one-shot container formation »). Les accumulateurs et batteries au plomb ayant recours à ce processus lors de leur fabrication ne peuvent donc pas bénéficier d'une durée de vie élevée.

### RÉSUMÉ DE L'INVENTION

L'invention vise à améliorer les performances des accumulateurs au plomb-acide, notamment en termes de capacité, et plus particulièrement les performances des accumulateurs dont les électrodes ont été formées en boîtier et en une seule étape.

Selon un premier aspect de l'invention, on tend vers cet objectif en prévoyant un accumulateur au plomb-acide comprenant :
- au moins une électrode négative ;
- au moins une électrode positive ;
- un électrolyte disposé entre les électrodes positive et négative et comprenant en pourcentage massique entre 7 % et 24 % d'acide sulfurique ; et
- une source d'ions phosphates, telle que l'acide phosphorique.

Avec un tel pourcentage massique d'acide sulfurique dans l'électrolyte, soit une concentration en acide sulfurique plus faible que dans les électrolytes de l'art antérieur, l'accumulateur bénéficie d'excellentes performances en termes d'utilisation du matériau actif (positif) et de maintien de la capacité au cours du cyclage. En outre, avec cet électrolyte, il devient possible de former des électrodes positives en présence d'acide phosphorique. Des électrodes positives de durée de vie élevée peuvent alors être obtenues en ayant recours au processus de formation en boîtier et en une seule étape.

Avantageusement, l'électrolyte comprend en pourcentage massique entre 15 % et 22 % d'acide sulfurique.

Dans un premier mode de réalisation de l'accumulateur, la source d'ions phosphates est contenue dans l'électrolyte. De préférence, l'électrolyte comprend en pourcentage massique entre 0,3 % et 3 % d'acide phosphorique.

Dans un deuxième mode de réalisation, ladite au moins une électrode positive comprend un collecteur de courant recouvert d'une pâte de matériau actif et la source d'ions phosphates est contenue dans la pâte de matériau actif. De préférence, la pâte de matériau actif comprend de l'oxyde de plomb et entre 20 g et 40 g d'acide phosphorique par kilo d'oxyde de plomb.

Un deuxième aspect de l'invention concerne un électrolyte pour accumulateur au plomb-acide comprenant en pourcentage massique entre 7 % et 24 % d'acide sulfurique et une source d'ions phosphates, telle que l'acide phosphorique.

Cet électrolyte peut également comprendre, en pourcentage massique, entre 0,5 % et 5 % d'un agent gélifiant, tel que la silice pyrogénée ou sous forme colloïdale.

Un troisième aspect de l'invention concerne un procédé de fabrication d'un accumulateur au plomb-acide muni d'un boîtier, comprenant les étapes suivantes :
- disposer au moins une électrode négative et au moins une électrode positive dans le boîtier ;
- remplir le boîtier d'un électrolyte comprenant de l'acide sulfurique ; et
- incorporer une source d'ions phosphates, telle que l'acide phosphorique, dans l'électrolyte ou l'électrode positive.

Ce procédé de fabrication est remarquable en ce que en ce que l'électrolyte comprend en pourcentage massique entre 7 % et 24 % d'acide sulfurique.

Dans un mode de mise en oeuvre préférentiel du procédé de fabrication, ladite au moins une électrode positive comprend un collecteur de courant recouvert d'une pâte de matériau actif et ladite au moins une électrode positive est soumise à un processus de formation dans le boîtier, de façon à convertir la pâte de matériau actif en un matériau actif positif.

De préférence, la source d'ions phosphates est incorporée dans l'électrolyte ou la pâte de matériau actif avant d'accomplir le processus de formation de ladite au moins une électrode positive.

### BRÈVE DESCRIPTION DES FIGURES

D'autres caractéristiques et avantages de l'invention ressortiront clairement de la description qui en est donnée ci-dessous, à titre indicatif et nullement limitatif, en référence aux figures annexées, parmi lesquelles :
- la figure 1 représente un mode de réalisation particulier d'un accumulateur au plomb-acide selon le premier aspect de l'invention ;
- la figure 2 représente des étapes d'un procédé de fabrication d'un accumulateur au plomb-acide selon le troisième aspect de l'invention ; et
- les figures 3A et 3B représentent l'évolution de la tension et de la résistance interne d'un accumulateur au plomb-acide, respectivement avec un électrolyte selon le deuxième aspect de l'invention et lorsque l'accumulateur est dépourvu d'acide phosphorique.

Pour plus de clarté, les éléments identiques ou similaires sont repérés par des signes de référence identiques sur l'ensemble des figures.

### DESCRIPTION DÉTAILLÉE D'AU MOINS UN MODE DE RÉALISATION

L'article [« Influence of H2SO4 concentration on lead-acid battery performance: H-type and P-type batteries », D. Pavlov et al., Journal of Power Sources, Vol. 161, pp.658-665, 2006] montre que la capacité initiale (i.e. pour un état de charge égal à 100 %) maximale des électrodes positives d'une batterie au plomb-acide est atteinte lorsque l'électrolyte, constituée d'une solution d'acide sulfurique, présente une densité initiale de 1,24 g/cm³ (équivalent à un pourcentage massique d'acide sulfurique égal à 32,61 %). Avec une telle densité d'électrolyte, le taux d'utilisation du matériau actif positif est en effet maximal et égal à 55 %. L'article montre par ailleurs que la durée de vie des électrodes positives augmente au fur et à mesure qu'on diminue la densité de l'électrolyte en dessous de 1,24 g/cm³. La plus longue durée de vie (environ 600 cycles de charge/décharge) est atteinte pour une densité d'électrolyte égale à 1,15 g/cm³ (pourcentage massique : 21,38 %). Le taux d'utilisation du matériau actif positif est alors égal à 30 % environ.

En d'autres termes, une diminution de la concentration en acide sulfurique dans l'électrolyte produit les mêmes effets que l'ajout d'acide phosphorique dans un accumulateur au plomb-acide : une augmentation de la durée de vie au détriment d'une plus faible capacité des électrodes positives.

Les inventeurs ont constaté expérimentalement qu'en réunissant dans un accumulateur de l'acide phosphorique et un électrolyte de faible concentration en acide sulfurique, et plus particulièrement un électrolyte dont le pourcentage massique en acide sulfurique est compris entre 7% et 24 %, l'accumulateur présentait des performances élevées, notamment en termes d'utilisation du matériau actif positif. Ces performances sont supérieures à celles obtenues lorsque l'acide phosphorique est absent et à celles obtenues en présence d'acide phosphorique avec une concentration d'acide sulfurique plus élevée (typiquement 1,24 g/cm³-1,30 g/cm³, soit plus de 30 % en pourcentage massique). Les meilleures performances sont toutefois atteintes pour un pourcentage massique d'acide sulfurique dans l'électrolyte compris entre 15 % et 22 % d'acide sulfurique.

Ces résultats expérimentaux sont surprenants car contraires aux attentes. En effet, pris individuellement, l'ajout d'acide phosphorique et la diminution de la concentration en acide sulfurique ont chacun tendance à faire diminuer le taux d'utilisation du matériau actif, et donc la capacité des électrodes positives. Ici, leur combinaison produit l'effet inverse.

En outre, avec cet électrolyte de plus faible concentration en acide sulfurique, la formation des électrodes positives devient possible en présence d'acide phosphorique. Des électrodes positives de durée de vie élevée peuvent donc désormais être obtenues grâce au processus de formation en boîtier et en une seule étape (i.e. aucun changement d'électrolyte au cours de la fabrication de l'accumulateur).

L'accumulateur au plomb-acide mis au point par les inventeurs comprend donc une source d'ions phosphates, telle que l'acide phosphorique, un électrolyte dont le pourcentage massique initial (i.e. avant toute réaction électrochimique de formation, de charge ou de décharge) en acide sulfurique est compris entre 7 % et 24 %, au moins une électrode positive et au moins une électrode négative.

Les électrodes positive et négative (appelés également « plaques » positive et négative) comprennent chacune un collecteur de courant, par exemple en métal (plomb, titane) ou en carbone. Ce collecteur de courant est recouvert, selon l'état dans lequel se trouvent les électrodes, d'une pâte de matériau actif (électrodes dites « non formées ») ou d'un matériau actif (électrodes dites « formées »). Le collecteur de courant est de préférence en forme de grille et les pores de cette grille sont remplis de pâte/matériau actif. La pâte de matériau actif de l'électrode positive (appelée ci-après « pâte de matériau actif positif ») et la pâte de matériau actif de l'électrode négative (« pâte de matériau actif négatif ») comprennent principalement de l'oxyde de plomb (PbO), de l'acide sulfurique (H₂SO₄) en solution aqueuse et de l'eau. La pâte de matériau actif négatif peut également contenir des additifs tri-composants composés principalement de lignosulfonates, de carbone et de sulfate de baryum (BaSO4) (au total 0,5 % à 5 % de la masse de PbO).

La pâte de matériau actif positif et la pâte de matériau négatif sont transformées respectivement en matériaux actifs positif et négatif, lors du processus de formation des électrodes. Le matériau actif positif est essentiellement constitué (i.e. à plus de 95 %) de dioxyde de plomb (PbO₂), tandis que le matériau actif négatif est essentiellement constitué de plomb spongieux (Pb). Le processus de formation peut être considéré comme la première charge de l'accumulateur, compte tenu que les matériaux actifs obtenus à l'issue du processus de formation sont sensiblement identiques à ceux obtenus après une charge classique.

L'électrolyte, sous forme liquide ou de gel, est disposé en contact avec les électrodes positive et négative de l'accumulateur. Il peut être absorbé par un séparateur, interposé entre les électrodes positive et négative, ou contenu dans un boîtier dans lequel sont placées les électrodes. Le séparateur est par exemple de type AGM (« Adsorptive Glass Mat »), c'est-à-dire une feuille microporeuse en fibres de verre. Ce type de séparateur est couramment employé dans les batteries d'accumulateurs au plomb-acide à régulation par soupape (ou batteries VRLA, pour « Valve-Regulated Lead-Acid » en anglais), pour stocker l'électrolyte et maintenir le matériau actif sur les électrodes. Alternativement, le séparateur peut être constitué d'un polymère, tel que le polyéthylène.

L'électrolyte peut comporter, outre une solution d'acide sulfurique, un agent gélifiant tel que la silice pyrogénée ou sous forme colloïdale. Le pourcentage massique de cet agent gélifiant dans l'électrolyte, c'est-à-dire le rapport entre la masse du gélifiant sur la masse totale de l'électrolyte, est de préférence compris entre 0,5 % et 5 %.

L'acide phosphorique peut être contenu dans l'électrolyte. Le pourcentage massique de l'acide phosphorique dans l'électrolyte est avantageusement compris entre 0,3 % et 3 %. En dessous de 0,3%, l'effet produit par l'ajout d'acide phosphorique est faible. Au-delà de 3%, du phosphate de Pb(IV) risque de se former sur les plaques négatives, ce qui peut être préjudiciable pour leur fonctionnement.

Alternativement, l'acide phosphorique peut être contenu dans la pâte de matériau actif positif, par exemple en ajoutant au cours de sa préparation entre 20 g et 40 g d'acide phosphorique par kilo d'oxyde de plomb (PbO). La masse d'acide phosphorique représente alors entre 2 % et 4 % de la masse d'oxyde de plomb.

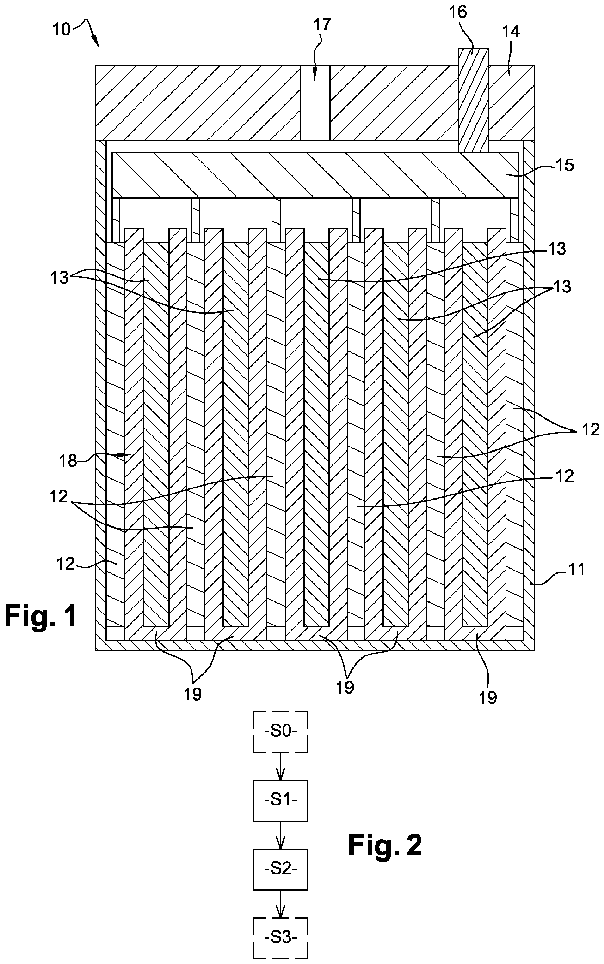

La figure 1 représente, en vue de coupe, un mode de réalisation particulier d'un accumulateur au plomb-acide 10 selon l'invention. L'accumulateur 10 comprend un boîtier 11, une pluralité d'électrodes ou plaques négatives 12 et une pluralité d'électrodes ou plaques positives 13. Les électrodes négatives 12 et les électrodes positives 13 sont avantageusement disposées en alternance dans le boîtier 11. Ainsi, chaque électrode fait face à une ou deux électrodes de polarité opposée. Le boîtier 11 est de préférence fermé par un couvercle 14.

Les électrodes négatives 12 sont reliées électriquement entre elles par un premier connecteur 15, en contact électrique avec une borne négative 16 de l'accumulateur 10. De la même façon, les électrodes positives 13 sont interconnectées par un deuxième connecteur, en contact électrique avec une borne positive de l'accumulateur. La borne positive et le deuxième connecteur ne sont pas visibles sur la figure 1, car ils sont disposés dans un autre plan de coupe, parallèle à celui de la figure 1. De préférence, la borne négative 16 et la borne positive traversent le couvercle 14 et font saillie en dehors de l'accumulateur 10. Un orifice 17 peut être aménagé dans le couvercle 14, afin de remplir le boîtier 11 d'un électrolyte 18 après que le couvercle 14 ait été scellé sur le boîtier 11.

Dans ce mode de réalisation particulier, les électrodes de polarité opposée, disposées deux à deux en regard l'une de l'autre, sont séparées par une membrane microporeuse isolante électriquement, appelée « séparateur ». Les pores de cette membrane permettent la diffusion des anions et cations (H⁺, SO₄²⁻) de l'électrolyte, tout en évitant le transport des matériaux actifs d'une électrode à l'autre. Chaque électrode positive 13 est de préférence enveloppée dans une feuille de séparateur 19 et disposée entre deux électrodes négatives 12, de sorte que les électrodes négatives 12 viennent en appui contre la feuille de séparateur 19. Les feuilles de séparateur 19 sont de préférence de type AGM ou en polymère (ex. polyéthylène). Ainsi, dans ce mode de réalisation particulier, l'électrolyte 18 est sous forme liquide et absorbé par les feuilles de séparateur 19.

Dans une variante de réalisation (non représentée sur les figures), l'accumulateur est dépourvu de séparateur et les électrodes « baignent » directement dans l'électrolyte, sous forme liquide ou de gel. L'électrolyte remplit alors, au moins partiellement, le boîtier de l'accumulateur.

Plusieurs accumulateurs peuvent être connectés en série et/ou en parallèle pour former une batterie au plomb-acide. Les accumulateurs (appelés alors « cellules de batterie ») peuvent être chacun muni d'un boîtier et disposés dans un boîtier de batterie appelé « bac ». Alternativement, les différents accumulateurs partagent un même boîtier, confondu avec le bac de la batterie. Le bac de la batterie est de préférence compartimenté, chaque compartiment recevant un accumulateur (avec ou sans boîtier).

Un procédé de fabrication de l'accumulateur au plomb-acide selon l'invention va maintenant être décrit en relation avec la figure 2. L'accumulateur peut être assemblé de différentes façons, selon qu'on utilise des électrodes positives et négatives déjà formées ou au contraire des électrodes non formées.

Ce procédé de fabrication comprend une étape S1 consistant à disposer des électrodes positives et négatives dans le boîtier de l'accumulateur, et une étape S2 de remplissage du boîtier avec de l'électrolyte.

Comme cela est représenté sur la figure 2, l'étape S2 de remplissage du boîtier est de préférence accomplie après l'étape S1 de disposition des électrodes dans le boîtier. Le procédé de fabrication n'est cependant pas limité à cet ordre des étapes S1 et S2. Le boîtier pourrait être également rempli d'électrolyte avant d'y introduire les électrodes.

Dans un premier mode de mise en oeuvre du procédé de fabrication, les électrodes disposées dans le boîtier de l'accumulateur à l'étape S1 sont déjà formées. Une fois rempli d'électrolyte à l'étape S2, l'accumulateur, pré-chargé, peut donc être directement utilisé en cyclage (en commençant donc par une décharge).

L'électrolyte présente, au moment du remplissage, un pourcentage massique en acide sulfurique compris entre 7% et 24 %, de préférence entre 15 % et 22 %. L'électrolyte est avantageusement préparé en mélangeant une solution d'acide sulfurique de densité comprise entre 1,05 g/cm³ et 1,17 g/cm³ (soit une concentration comprise entre 0,83 mol/L et 2,86 mol/L), une solution d'acide phosphorique et, le cas échéant, un agent gélifiant. Les solutions d'acide sulfurique et d'acide phosphorique sont de préférence des solutions aqueuses. La concentration de la solution d'acide phosphorique est par exemple de 85 % (soit 14,65 mol/L).

Dans un deuxième mode de mise en oeuvre, l'assemblage de l'accumulateur est réalisé avec des électrodes non formées. Le procédé de fabrication de l'accumulateur comprend alors, en plus des étapes S1-S2 précédemment décrites, une étape S0 dite d'empattage des électrodes et un processus S3 de formation des électrodes dans l'électrolyte.

L'étape d'empattage S0 se déroule en dehors du boîtier de l'accumulateur, c'est-à-dire avant d'introduire les électrodes dans le boîtier (étape S1). Elle consiste à revêtir des collecteurs de courant positifs de la pâte de matériau actif positif et des collecteurs de courant négatif de la pâte de matériau actif négatif. L'étape d'empattage S0 est avantageusement suivie d'une étape de durcissement des pâtes de matériau actif.

À l'inverse, le processus S3 de formation des électrodes est accompli dans le boîtier de l'accumulateur, de préférence en une seule étape (« one-shot container formation »). Autrement dit, l'électrolyte utilisé pour la formation des électrodes constitue l'électrolyte final de l'accumulateur et servira pour le cyclage de l'accumulateur. De façon classique, le processus de formation S3 peut comporter une phase d'imbibition/trempage des électrodes dans l'électrolyte, suivie d'une phase de conversion électrochimique. Les électrodes positives et négatives, préalablement interconnectées, sont traversées par un courant électrique uniquement lors de la phase de conversion électrochimique. Le pourcentage massique d'acide sulfurique susmentionné est celui mesuré au moment de remplissage du boîtier, avant la phase d'imbibition/trempage des électrodes dans l'électrolyte (la concentration en acide sulfurique évolue au cours du processus de formation).

Comme la formation des électrodes est dorénavant possible en présence d'acide phosphorique, celui-ci est avantageusement incorporé avant d'accomplir le processus de formation S3, soit dans l'électrolyte, soit dans la pâte de matériau actif positif.

Le procédé de fabrication selon les étapes S0-S3 est simple et rapide à mettre en oeuvre, car il évite de recourir à plusieurs électrolytes et aux étapes de rinçage et de séchage des électrodes, qui sont propres un processus de formation en réservoir. Il permet donc d'obtenir à moindre coût des accumulateurs au plomb-acide de performances élevées, notamment en termes de durée de vie et de capacité.

L'invention va maintenant être décrite au travers de plusieurs exemples de réalisation, donnés à titre illustratif et non limitatif.

Ces exemples concernent des éléments accumulateurs de batterie au plomb-acide, appelés également « cellules ». Chaque élément accumulateur comprend :
- une électrode négative chargée à sec, munie d'un collecteur de courant en en alliage plomb-calcium ;
- une électrode positive non formée, comprenant une grille de titane en tant que collecteur de courant ;
- une électrode de référence Ag/Ag₂SO₄ ;
- un séparateur de type AGM.

Les électrodes et le séparateur forment un empilement qui est introduit dans une enveloppe en polyéthylène, après avoir été comprimé.

Chaque accumulateur comprend en outre un boîtier rempli en excès d'un électrolyte. L'accumulateur est soumis au vide pendant 10 min, pour évacuer l'air contenu dans les pores des électrodes/séparateur et pour remplir de façon homogène ces pores d'électrolyte. Le taux de compression de l'empilement est ensuite ajusté de manière à réduire de 30 % environ l'épaisseur des séparateurs (de 1,3 mm à 0,9 mm). Puis, l'accumulateur est à nouveau soumis au vide pendant 5 min. Après cela, l'électrolyte en excès est éliminé et l'accumulateur est laissé en circuit ouvert pendant 30 min.

L'électrode positive est ensuite chargée/formée avec les courants suivants :
- I₁ = 1,12 mA/g_{PbO2} (Cₙ/100h) pendant 3h ;
- I₂ = 2,24 mA/g_{PbO2} (Cₙ/50h) pendant 3h ;
- I₃ = 4,48 mA/g_{PbO2} (Cₙ/25h) pendant 100h ;
avec Cₙ la capacité nominale de l'électrode positive, en considérant un taux d'utilisation du matériau actif positif de 50 % (soit 112 mAh/g_{PbO2}).

Quatre pâtes de matériau actif ont été utilisées pour fabriquer les électrodes positives des accumulateurs. Le tableau 1 ci-dessous donne la composition de chacun de ces pâtes :

**Tableau 1**

| **Composant (masse en g)** | **Pâte n° 1** | **Pâte n° 2** | **Pâte n° 3** | **Pâte n° 4** |
|---|---|---|---|---|
| PbO | 25 | 25 | 25 | 25 |
| H₂SO₄, 50 % dans H₂O | 2,75 | 1,92 | 2,75 | 1,92 |
| H₃PO₄, 85 % dans H₂O | --- | 1,03 | --- | 1,03 |
| (BiO)₂CO₃ | 0,075 | 0,075 | 0,075 | 0,075 |
| SnO | 0,075 | 0,075 | 0,075 | 0,075 |
| SiO₂ pyrogéné | 0,25 | 0,25 | 0,25 | 0,25 |
| Vanisperse-A | 0,05 | 0,05 | 0,05 | 0,05 |
| Tubeall, 0,6% dans H₂O | 1,25 | --- | --- | 1,25 |
| H₂O | 12,5 | 13 | 12,5 | 14 |

Le composant « Vanisperse-A », commercialisé par la société « Borregaard LignoTech », désigne un lignosulfonate de sodium pour batterie au plomb-acide et le composant « Tubeall » désigne une dispersion aqueuse de nanotubes de carbone (concentration : 0,2 %) et de polyvinylpyrrolidone (PVP) (concentration : 0,4 %). Les valeurs de taux d'utilisation du matériau actif positif données ci-après ont été mesurées à température ambiante (23 °C ± 2 °C).

### Exemple 1 :

Un premier accumulateur, dont l'électrode positive a été fabriquée en utilisant la pâte n° 3, est rempli d'un électrolyte comprenant 0,5 g de silice pyrogénée, 0,294 g d'une solution aqueuse de H₃PO₄ (à une concentration de 85 %) et 24,206 g d'une solution aqueuse de H₂SO₄ de densité égale à 1,15 g/cm³. La masse d'acide sulfurique représente 20,70 % de la masse totale de l'électrolyte. Le taux d'utilisation du matériau actif positif, mesuré pour une densité de courant de 5,6 mA/g_{PbO2} (soit Cₙ/20h), est égal à 64,72 % lors du premier cycle de charge/décharge et atteint au maximum 66,07 % après quelques cycles de charge/décharge.

### Exemple comparatif 1.1 :

À titre de comparaison, lorsqu'un deuxième accumulateur ayant une électrode positive du même type (pâte n° 3) est rempli d'un électrolyte comprenant une solution de H₂SO₄ de densité égale à 1,24 g/cm³ (pourcentage massique de l'acide sulfurique égal à 31,57 %), au lieu d'une solution à 1,15 g/cm³, le taux d'utilisation initial du matériau actif positif (à une densité de courant de 5,6 mA/g_{PbO2}, soit Cₙ/20h) n'est que de 0,11 % et atteint au maximum 0,57 % au 3^{ième} cycle de charge/décharge. Les variations du potentiel de l'électrode positive, mesuré après chaque décharge, indiquent la présence d'une couche de passivation de forte résistance électrique.

Ce premier exemple comparatif confirme l'enseignement de K.D. Merz et al. selon lequel la formation des électrodes positives est impossible lorsque l'électrolyte contient de l'acide phosphorique et une solution de H₂SO₄ de forte densité (typiquement supérieure à 1,20 g/cm³). Par contre, lorsque la densité de la solution de H₂SO₄ est faible (1,05-1,17 g/cm³), la formation des électrodes positives est non seulement possible, mais un taux d'utilisation élevé du matériau actif positif est en outre atteint (cf. exemple 1).

### Exemple comparatif 1.2 :

Un troisième accumulateur avec le même type d'électrode positive (pâte n° 3) a été rempli d'un électrolyte comprenant uniquement 0,5 g de silice pyrogénée et 24,5 g d'une solution de H₂SO₄ de densité égale à 1,15 g/cm³.

Le tableau 2 ci-dessous permet de comparer les performances en décharge (i.e. après formation de l'électrode positive), en termes de taux d'utilisation du matériau actif positif et pour plusieurs densités de courant en décharge, entre ce troisième accumulateur, dépourvu d'acide phosphorique (i.e. sans H₃PO₄), et le premier accumulateur (avec H₃PO₄).

**Tableau 2**

| Densité de courant | C/20h Taux initial : | C/20h Taux max : | C/5h Taux max : | C/2h Taux max : | C/1h Taux max : | 2C/1h Taux max : |
|---|---|---|---|---|---|---|
| sans H₃PO₄ | 39,42% | 49,35% | 42,65% | 37,19% | 32,71% | 22,87% |
| avec H₃PO₄ | 64,72% | 66,07% | 60,67% | 55,24% | 47,95% | 36,83% |

Quelle que soit la densité de courant, on constate que le taux d'utilisation du matériau actif positif est plus important lorsque l'électrolyte contient de l'acide phosphorique. Par conséquent, l'ajout d'acide phosphorique dans un électrolyte de faible concentration en acide sulfurique produit un effet opposé à celui habituellement observé dans un électrolyte de forte concentration en acide sulfurique.

Les données du tableau 2 ont en outre permis de calculer la densité de courant I₂₀ₕ correspondant à une décharge d'une durée de 20 h des deux accumulateurs : I₂₀ₕ = 5.3 mA/g_{PbO2} pour l'accumulateur sans H₃PO₄ et I₂₀ₕ = 6.06 mA/g_{PbO2} pour l'accumulateur avec H₃PO₄. Les deux accumulateurs ont ensuite été soumis à une multitude de cycles de charge/décharge suivant une procédure définie dans la norme européenne EN 50342+A1 relative aux tests des batteries au plomb-acide. Cette procédure est la suivante :
1) Décharge avec un courant de 5*I₂₀ₕ pendant une durée de 2h suivie d'une période de 5 min en circuit ouvert, puis mesure de la résistance interne (en courant continu) et de la tension de l'accumulateur ;
2) Charge à courant constant/tension constante pendant une durée totale de 5 h avec un courant de 5*I₂₀ₕ, la charge étant limitée à une tension de 2,4 V et suivie d'une période de 5 min en circuit ouvert, puis mesure de la résistance interne (en courant continu).

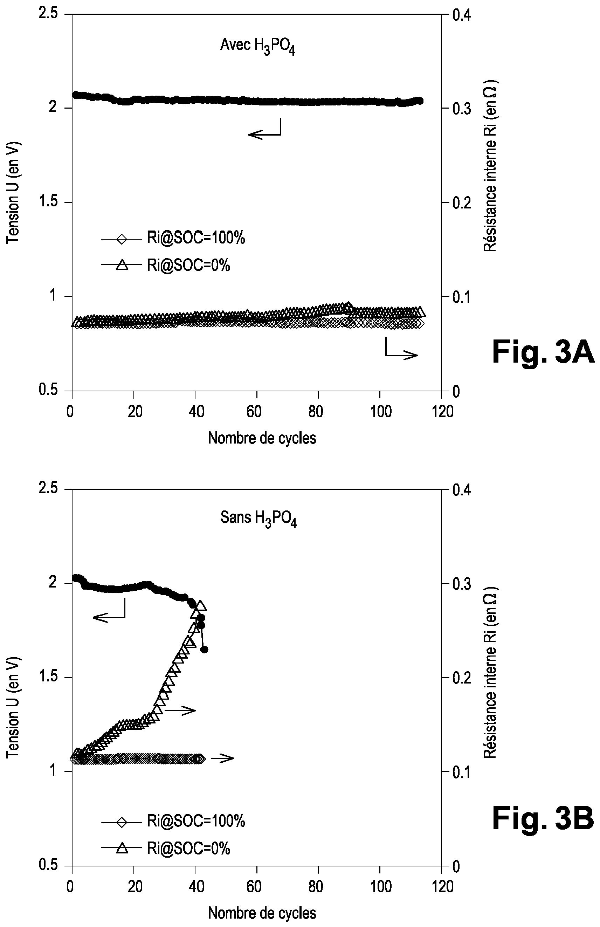

La figure 3A montre l'évolution au cours du cyclage de la tension U du premier accumulateur (exemple 1 : avec H₃PO₄), à la fin de l'étape 1) de décharge, et de sa résistance interne Ri, à la fin de l'étape 1) de décharge (SOC = 0 %) et à la fin de l'étape 2) de charge (SOC = 100 %). La figure 3B représente à titre de comparaison les mêmes critères de performance pour le troisième accumulateur (exemple comparatif 1.2 : sans H₃PO₄).

Ces tests de vieillissement montrent les améliorations apportées par l'ajout d'acide phosphorique dans un électrolyte de faible concentration en acide sulfurique (densité de 1,15 g/cm³) sur le cyclage de l'accumulateur. La tension U du premier accumulateur contenant de l'acide phosphorique (exemple 1 ; Fig.3A) reste proche de sa valeur (initiale) maximale après 120 cycles de charge/décharge (le cyclage est toujours en cours à ce jour), alors que celle du troisième accumulateur sans acide phosphorique (exemple comparatif 1.2 ; Fig.3B) diminue rapidement après 40 cycles.

La quasi-stagnation de la résistance interne Ri à SOC = 100 %, visible sur les figures 3A-3B, indique que les deux accumulateurs sont chargés correctement et que les collecteurs de courant positifs ne se dégradent pas. Par contre, le troisième accumulateur voit sa résistance interne Ri à SOC = 0 % augmenter de façon significative au cours du cyclage (cf. Fig.3B), ce qui indique une dégradation progressive de la structure du matériau actif et conduit à une diminution du taux d'utilisation du matériau actif. Ce phénomène n'est pas observé dans le premier accumulateur, même après plus de 100 cycles (cf. Fig.3A).

L'accumulateur contenant de l'acide phosphorique supporte donc un nombre de cycles bien plus important que l'accumulateur dépourvu d'acide phosphorique. Ces résultats sont d'autant plus intéressants que l'accumulateur contenant de l'acide phosphorique est soumis à des conditions de charge/décharge légèrement plus sévères, en raison d'une utilisation plus importante du matériau actif positif (densité de courant de 30,3 mA/g_{PbO2} contre 26,5 mA/g_{PbO2}).

### Exemple 2 :

Un quatrième accumulateur, dont l'électrode positive a été fabriquée en utilisant la pâte n° 2 (avec H₃PO₄), est rempli d'un électrolyte comprenant 0,5 g de silice pyrogénée et 24,5 g d'une solution de H₂SO₄ de densité égale à 1,15 g/cm³. Le pourcentage massique d'acide sulfurique dans cet électrolyte est de 20,95 %. Le taux d'utilisation initial du matériau actif positif, mesuré pour une densité de courant de 5,6 mA/g (Cₙ/20h), est égal à 44,75 % et atteint au maximum 50,26 % au 4^{ème} cycle de charge/décharge.

### Exemple comparatif 2.1 :

À titre de comparaison, un cinquième accumulateur ayant une électrode positive du même type (pâte n° 2) a été rempli d'un électrolyte comprenant 0,5 g de silice pyrogénée et 24,5 g d'une solution de H₂SO₄ de densité égale à 1,24 g/cm³ (pourcentage massique de l'acide sulfurique égal à 31,96 %). Ce cinquième accumulateur présente un taux d'utilisation initial du matériau actif positif de seulement 25,81 % et un taux d'utilisation maximal de 40,17 % (au 11^{ième} cycle de charge/décharge).

Cette deuxième étude comparative montre que, lorsque l'acide phosphorique est ajouté à la pâte de matériau actif, la formation de l'électrode positive est possible quelle que soit la densité de la solution de H₂SO₄. Une concentration en acide sulfurique plus faible résulte toutefois en une meilleure formation de l'électrode positive, c'est-à-dire une meilleure capacité initiale (représentée par un taux d'utilisation initial plus élevé) et en une capacité maximale plus élevée (représentée par un taux d'utilisation maximal plus élevé).

### Exemple comparatif 2.2 :

Un sixième accumulateur rempli avec le même électrolyte que le cinquième accumulateur (d = 1,24 g/cm³), mais dont l'électrode positive a été revêtue de la pâte n° 3 (sans H₃PO₄) au lieu de la pâte n°2, présente des taux d'utilisation initial et maximal valant respectivement 34,3 % et 47,8 %, soient des taux inférieurs à ceux du quatrième accumulateur (exemple 2 : d = 1,15 g/cm³ avec H₃PO₄) mais supérieurs à ceux du cinquième accumulateur (exemple comparatif 2.1 : d = 1,24 g/cm³, avec H₃PO₄).

Cela montre que l'acide phosphorique, seul, a bien pour effet de diminuer le taux d'utilisation du PbO₂.

### Exemple 3 :

Un septième accumulateur, dont l'électrode positive a été fabriquée en utilisant la pâte n° 4 (contenant des nanotubes de carbone et H₃PO₄), est rempli d'un électrolyte comprenant 0,5 g de silice pyrogénée et 24,5 g d'une solution de H₂SO₄ de densité égale à 1,15 g/cm³ (pourcentage massique d'acide sulfurique : 20,95 %). Le taux d'utilisation initial du matériau actif positif (à C/20h) est de 55,68 % et le taux d'utilisation maximal (à C/20h) est de 62,00 % (au 4^{ème} cycle de charge/décharge).

Comparé au quatrième accumulateur (cf. exemple 2) utilisant la pâte n° 2 (sans nanotubes de carbone), ce troisième exemple montre que l'ajout de nanotubes de carbone à la pâte de matériau actif améliore le processus de formation et favorise les réactions électrochimiques de charge/décharge. Le taux d'utilisation maximal augmente en effet de de 50,26 % à 62 %.

### Exemple comparatif 3.1 :

Le constat est le même avec une solution de H₂SO₄ de densité égale à 1,24 g/cm³ (pourcentage massique de l'acide sulfurique égal à 31,96 %), au lieu de 1,15 g/cm³, car les taux d'utilisation initial et maximal valent respectivement 35,53 % et 42,95 % (contre 25,81 % et 40,17 % sans nanotubes de carbone ; cf. exemple comparatif 2.1).

Cette troisième étude comparative montre également que la combinaison d'acide phosphorique et d'une faible concentration en acide sulfurique produit des effets supérieurs à ceux produits par le simple ajout de nanotubes de carbone dans un électrolyte de forte concentration en acide sulfurique. En effet, le taux d'utilisation maximal passe de 42,95 % à 62 % dans le premier cas, soit une augmentation de 19 points environ, alors qu'il n'augmente que de 12 points environ en ajoutant des nanotubes de carbone (de 50,26 % à 62 %).

Des résultats similaires ont été obtenus lorsque l'acide phosphorique est incorporé à l'électrolyte plutôt qu'à la pâte de matériau actif positif.

L'invention décrite ci-dessus s'applique à tout type d'accumulateur ou batterie au plomb-acide. Elle est particulièrement avantageuse dans le cas des batteries avec séparateurs AGM dont les cellules sont enroulées en forme de spirale, dans le cas des batteries à électrodes bipolaires et dans le cas des batteries à plaques minces, puisque ces différents types de batteries ne peuvent être fabriqués qu'en utilisant le processus de formation en boîtier et en une seule étape.

Par ailleurs, l'invention n'est pas limitée à l'acide phosphorique. Une ou plusieurs autres sources d'ions phosphates peuvent être incorporées dans la pâte de matériau actif ou dans l'électrolyte, en remplacement ou en complément de l'acide phosphorique, notamment des sels d'acide phosphorique, des acides polyphosphoriques, des sels d'acide polyphosphorique et des sels de phosphate. À titre d'exemple, on peut citer comme additifs de la pâte ou de l'électrolyte :
- l'acide pyrophosphorique (H₄P₂O₇) ;
- l'acide triphosphorique (H₅P₃O₁₀) ;
- l'acide tétrapolyphosphorique (H₆P₄O₁₃) ;
- l'acide trimétaphosphorique (H₃P₃O₉) ;
- l'anhydride phosphorique (P₄O₁₀) ;
- le phosphate monosodique, anhydre (NaH₂PO₄) ou monohydrate (NaH₂PO₄((H₂O)) ;
- le phosphate disodique, anhydre (Na₂HPO4) ou dihydrate (Na₂HPO₄((H₂O)) ;
- le diphosphate monosodique anhydre (NaH₃P₂O₇) ;
- le diphosphate disodique anhydre (Na₂H₂P₂O₇) ;
- le diphosphate trisodique anhydre (Na₃HP₂O₇) ou monohydrate (Na₃HP₂O₇(H₂O)) ;
- le diphosphate tétrasodique anhydre (Na₄P₂O₇) ;
- le phosphate de monopotassium (KH₂PO₄) ;
- le phosphate dipotassique (K₂HPO₄) ;
- le phosphate tripotassique (K₃PO₄) ;
et comme additifs de la pâte seulement :
- le phosphate de plomb(II) (Pb₃(PO₄)₂) ;
- le phosphate monocalcique (Ca(H₂PO₄)₂) ;
- le phosphate bicalcique (CaHPO₄) ;
- le phosphate tricalcique (Ca₃(PO₄)₂) ;
- le pyrophosphate de calcium (Ca₂P₂O₇).

La quantité d'additif à utiliser peut être calculée en conservant la même quantité de phosphore (P) par kg de PbO (dans le cas de la pâte) ou par litre d'électrolyte que celle donnée en relation avec l'acide phosphorique.

Enfin, il existe de nombreuses façons de disposer un séparateur (par exemple de type AGM) entre une électrode négative et une électrode positive de l'accumulateur au plomb-acide. Chaque électrode négative de l'accumulateur peut être enveloppée dans une feuille de séparateur, au lieu de l'électrode positive ou en plus de l'électrode positive. La feuille de séparateur peut également ne pas être enveloppante.

## Revendications

1. Procédé de fabrication d'un accumulateur (10) au plomb-acide muni d'un boîtier (11), comprenant les étapes suivantes :
- disposer (S1) au moins une électrode négative (12) et au moins une électrode positive (13) dans le boîtier, ladite au moins une électrode positive comprenant un collecteur de courant recouvert d'une pâte de matériau actif ;
- remplir (S2) le boîtier (11) d'un électrolyte (18) comprenant en pourcentage massique entre 7 % et 24 % d'acide sulfurique ;
- soumettre (S3) ladite au moins une électrode positive à un processus de formation dans le boîtier (11), de façon à convertir la pâte de matériau actif en un matériau actif positif ;
procédé dans lequel une source d'ions phosphates, telle que l'acide phosphorique, est incorporée dans l'électrolyte (18) ou la pâte de matériau actif avant d'accomplir le processus de formation de ladite au moins une électrode positive (13).

2. Procédé selon la revendication 1, dans lequel le processus de formation est accompli dans le boîtier (11) en une seule étape.

3. Procédé selon l'une des revendications 1 et 2, dans lequel l'électrolyte (18) est absorbé par un séparateur interposé entre les électrodes négative et positive (12, 13).

4. Procédé selon l'une quelconque des revendications 1 à 3, dans lequel l'électrolyte (18) présente, au moment du remplissage, un pourcentage massique en acide sulfurique compris entre 15 % et 22 %.
